# FASCICULE DE BREVET EUROPEEN

(11) **EP 3 653 495 B1**
(45) Date de publication et mention de la délivrance du brevet: **28.12.2022**
(21) Numéro de dépôt: 19208576.9
(22) Date de dépôt: 12.11.2019
(51) Int. Cl.: B64C 25/40, B64C 25/34

(54) **PROCÉDÉ DE SÉCURISATION D'UN ACTIONNEUR D'ENTRAÎNEMENT EN ROTATION DE ROUE D'AÉRONEF DANS UNE POSITION DÉGAGÉE**
SICHERUNGSVERFAHREN EINES ANTRIEBSSTELLGLIEDS IN DER RADDREHUNG EINES LUFTFAHRZEUGS IN ENTKUPPELTER POSITION
METHOD FOR SECURING AN ACTUATOR FOR ROTATING AN AIRCRAFT WHEEL IN A DISENGAGED POSITION

(30) Priorité: 14.11.2018 FR 1860506
(43) Date de publication de la demande: 20.05.2020
(73) Titulaire: Safran Landing Systems, 78140 Vélizy-Villacoublay (FR)
(72) Inventeur: LIEGEOIS, Pierre-Yves, 77550 Moissy-Cramayel (FR); THORAVAL, Bruno, 77550 Moissy-Cramayel (FR)
(74) Mandataire: Lavialle, Bruno François Stéphane

(56) Documents cités:
- EP-A1- 2 982 603
- EP-A1- 3 222 521
- WO-A1-2015/040364
- US-A- 3 762 670
- US-A1- 2015 151 833

## Description

L'invention concerne un procédé de sécurisation d'un actionneur d'entraînement en rotation de roue d'aéronef en position dégagée.

### ARRIERE PLAN DE L'INVENTION

On connaît des aéronefs dont les atterrisseurs portent des roues équipée d'un actionneur d'entraînement en rotation. Pour des raisons de sécurité, il est imposé que, notamment dans les phases de décollage ou d'atterrissage, l'actionneur d'entraînement ne puisse interférer avec la roue. Certains de ces actionneurs d'entraînement sont ainsi montés mobiles sur l'atterrisseur entre une position engagée dans laquelle l'actionneur d'entraînement est susceptible d'entraîner la roue, et une position dégagée dans laquelle l'actionneur d'entraînement est éloigné de la roue et ne coopère pas avec celle-ci. Par exemple, l'actionneur d'entraînement est monté pivotant sur l'atterrisseur et est déplacé entre la position engagée et la position dégagée au moyen d'un actionneur de déplacement linéaire, comme un vérin. Un organe de verrouillage permet de maintenir l'actionneur d'entraînement en position dégagée durant les phases où il doit impérativement être empêché d'interférer avec la roue. Cependant, l'organe de verrouillage peut toujours défaillir, ce qui pose un problème de sécurité important. EP2982603 A1 et WO2015040364 A1 divulguent des systèmes d'entraînement pour la rotation d'une roue d'un train d'atterrissage d'avion avec des organes de verrouillage.

### OBJET DE L'INVENTION

L'invention vise à proposer un procédé de sécurisation de l'actionneur d'entraînement en position dégagée,

### PRESENTATION DE L'INVENTION

En vue de la réalisation de ce but, on propose un procédé de sécurisation d'un actionneur d'entraînement de roue d'atterrisseur d'aéronef en position dégagée de la roue, l'actionneur d'entraînement étant monté mobile sur l'atterrisseur entre ladite position dégagée dans laquelle il ne coopère pas avec la roue et une position engagée dans laquelle il coopère avec la roue pour assurer son entraînement en rotation, un actionneur de déplacement étant attelé à l'actionneur d'entraînement pour déplacer celui-ci entre les deux positions, et un organe de verrouillage étant disposé pour verrouiller l'actionneur d'entraînement en position dégagée. Selon l'invention, le procédé de l'invention comprend l'étape, alors que l'actionneur d'entraînement est verrouillé en position dégagée, de maintenir l'actionneur de déplacement commandé pour déplacer l'actionneur d'entraînement vers la position dégagée.

Ainsi, même en cas de défaillance de l'organe de verrouillage, l'actionneur d'entraînement est maintenu en position dégagée par l'actionneur de déplacement et ne peut donc se rapprocher de la roue pour interférer avec celle-ci.

Le procédé de l'invention impose de modifier le circuit d'alimentation en énergie de l'actionneur de déplacement pour que celui-ci continue à être alimenté (en courant ou en fluide sous pression) alors que l'actionneur d'entraînement est verrouillé en position dégagée.

### DESCRIPTION DES FIGURES

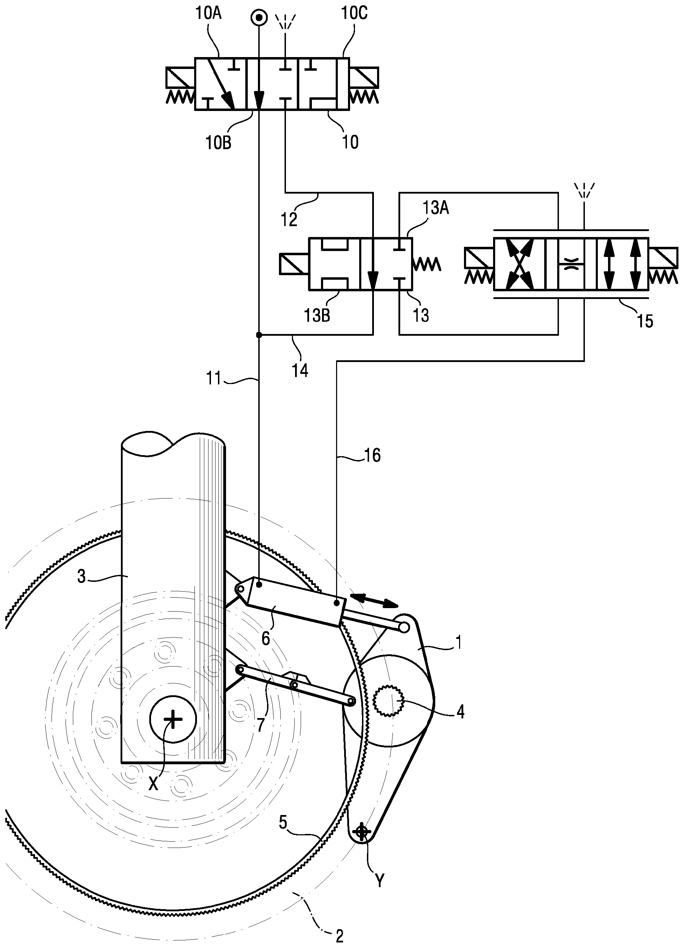

L'invention sera mieux comprise à la lumière de la description qui suit d'un mode particulier de réalisation de l'invention, en référence à la figure unique illustrant un schéma hydraulique d'un circuit d'alimentation d'un vérin de déplacement d'un actionneur d'entraînement adapté à mettre en oeuvre le procédé de l'invention.

### DESCRIPTION DETAILLEE DE L'INVENTION

En référence à la figure, l'invention s'applique à un actionneur d'entraînement 1 adapté à entraîner en rotation une roue 2 d'aéronef monté à rotation selon un axe de rotation X en bas d'un atterrisseur 3 d'aéronef. L'actionneur d'entraînement 1 est ici monté pivotant selon un axe de pivotement Y parallèle à l'axe d'articulation X, pour être mobile entre une position dégagée illustrée ici où un galet 4 de l'actionneur d'entraînement 1 est éloignée d'une piste d'entraînement 5 solidaire de la roue 2, et une position engagée dans laquelle le galet 4 de l'actionneur d'entraînement 1 est en appui sur la piste d'entraînement 5 de la roue 2, de sorte que l'actionneur d'entraînement 1 puisse entraîner la roue 2 en rotation. Pour ce faire, un vérin 6 double effet est attelé à l'actionneur d'entraînement 1 pour déplacer ce dernier entre les deux positions et également moduler l'effort d'appui du galet 4 contre la piste d'entraînement 5 lorsque l'actionneur d'entraînement 1 est en position engagée. Un organe de verrouillage 7 bloque l'actionneur d'entraînement 1 en position dégagée lorsque celui-ci n'est pas utilisé pour déplacer l'aéronef, notamment lors des phases de décollage ou d'atterrissage. Tout ceci est bien connu et n'est rappelé que pour situer le contexte de l'invention.

Selon le procédé de l'invention, on fait en sorte que le vérin 6 reste alimenté pour déplacer l'actionneur d'entraînement 1 vers la position dégagée quand l'actionneur de déplacement est verrouillé en position dégagée, afin de constituer une sécurité supplémentaire propre à pallier une défaillance de l'organe de verrouillage 7 et maintenir l'actionneur d'entraînement en position dégagée.

Pour ce faire, et conformément à un mode particulier de mise en œuvre de l'invention, le circuit d'alimentation et de commande du vérin 6 comporte tout d'abord un sélecteur 10 à trois positions avec un port de pression (symbole rond) et un port de retour (symbole en éventail), et deux ports de service reliés à une ligne d'alimentation 11 de la chambre pleine du vérin 6, et une ligne d'alimentation 12 d'une vanne de mode 13 détaillée ci-après. Le sélecteur 10 a une position de repos stable 10B dans laquelle elle met en communication la ligne d'alimentation 11 de la chambre pleine du vérin 6 avec la pression, ce qui a pour effet de maintenir le vérin 6 commandé en extension, et donc à déplacer l'actionneur d'entraînement 1 vers la position dégagée. Le sélecteur 10 peut être commandé électriquement pour être placé dans une position de dépressurisation 10C dans laquelle les deux lignes d'alimentation 11,12 sont connectées au retour. Le sélecteur 10 peut également être commandé électriquement pour être placé dans une position opérationnelle 10A dans laquelle la ligne d'alimentation 12 est connectée à la pression, qui arrive donc en entrée de la vanne de mode 13.

La vanne de mode 13 comporte deux positions, dont une position de repos 13A dans laquelle la pression amenée par la ligne d'alimentation 12 est redirigée vers la ligne d'alimentation 11 du vérin 6 par une dérivation 14, et une position d'activation 13B commandée électriquement, dans laquelle la pression est envoyée vers l'entrée en pression d'une servovalve 15, dont l'autre entrée est reliée au retour. L'une des sorties de la servovalve 15 est reliée par la vanne de mode 13 à la dérivation 14, et l'autre des sorties est reliée via une ligne 16 à la chambre annulaire du vérin 6. Ainsi, quand la vanne de mode 13 est placée dans la position d'activation 13B, le vérin 6 peut être commandé par la servovalve 15 pour déplacer l'actionneur d'entraînement 1 entre la position dégagée et la position engagée, et moduler la pression exercée par le galet 4 sur la piste 5 lors que l'actionneur d'entraînement 1 est en position engagée.

Ainsi, lorsque l'actionneur d'entraînement 1 a été déplacé vers la position dégagée et bloqué dans cette position par l'organe de verrouillage 7, le retour du sélecteur 10 vers la position de repos stable 10B maintient l'alimentation du vérin 6 dans le sens du déplacement vers la position dégagée. Cette disposition confère une sécurité accrue, en empêchant l'actionneur d'entraînement 1 d'interférer avec la roue 2 en cas de défaillance de l'organe de verrouillage 7.

Lorsque le sélecteur 10 est dans la position de repos stable, la servovalve 15 est neutralisée et toute commande de la servovalve 15 tendant à actionner le vérin 6 est sans effet sur celui-ci.

Pour permettre le déplacement de l'actionneur d'entraînement 1 vers la position engagée, il faut d'abord déplacer le sélecteur 10 vers la position opérationnelle 10A, puis, après avoir neutralisé l'organe de verrouillage 7, commander la vanne de mode 13 pour la placer dans la position d'activation 13B, ce qui permet la commande du vérin 6 au moyen de la servovalve 15.

On remarquera que quand le sélecteur 10 est placé dans la position de dépressurisation 10C, les deux chambres du vérin 6 sont alors à la même pression de sorte que le vérin 6 rappelle encore l'actionneur d'entraînement 1 vers la position dégagée.

L'invention n'est pas limitée à ce qui vient d'être décrit, mais englobe au contraire toute variante entrant dans le cadre défini par les revendications.

En particulier, bien que le procédé de l'invention ait été décrit dans le cadre d'un actionneur d'entraînement pivotant déplacé par un vérin hydraulique, le procédé de l'invention s'applique plus généralement à tout actionneur de déplacement mobile entre une position engagée et une position engagée et déplacée au moyen d'un actionneur de déplacement, qu'il soit linéaire ou angulaire, hydraulique ou électrique, du moment que l'actionneur de déplacement soit maintenu commandé pour déplacer l'actionneur d'entraînement vers la position dégagée. Dans le cas d'un actionneur électrique, le sélecteur 10, n'est plus une vanne mais un interrupteur, et la servovalve est remplacée par un organe de servocommande adapté à distribuer de l'énergie électrique vers l'actionneur de façon progressive.

## Revendications

1. Procédé de sécurisation d'un actionneur d'entraînement en rotation (1) de roue (2) d'atterrisseur d'aéronef en position dégagée de la roue, l'actionneur d'entraînement étant monté mobile sur l'atterrisseur entre ladite position dégagée dans laquelle il est éloigné de la roue et une position engagée dans laquelle il coopère avec la roue pour assurer son entraînement en rotation, un actionneur de déplacement (6) étant attelé à l'actionneur d'entraînement pour déplacer celui-ci entre les deux positions, et un organe de verrouillage (7) étant disposé pour verrouiller l'actionneur d'entraînement en position dégagée, le procédé étant **caractérisé en ce qu'**il comprend l'étape, alors que l'actionneur d'entraînement est verrouillé en position dégagée, de maintenir l'actionneur de déplacement (6) commandé pour déplacer l'actionneur d'entraînement (1) vers la position dégagée.

2. Procédé selon la revendication 1, dans lequel on équipe un circuit d'alimentation hydraulique de l'actionneur de déplacement (6) d'un sélecteur (10) ayant une position de repos stable (10A) dans laquelle l'actionneur de déplacement (6) est commandé pour déplacer l'actionneur d'entraînement (1) vers la position dégagée.

3. Procédé selon la revendication 2, dans lequel le sélecteur (10) comporte une position commandée (10C) de dépressurisation du circuit d'alimentation de l'actionneur.

4. Procédé selon la revendication 2, dans lequel le sélecteur (10) comporte une position commandée opérationnelle (10A) dans laquelle l'actionneur de déplacement peut être commandé par un organe de servocommande (15).

5. Procédé selon la revendication 4, dans lequel on équipe le circuit hydraulique d'une vanne de mode (13) qui est alimentée en pression uniquement si le sélecteur (10) est dans la position opérationnelle, et qui comporte une position de repos stable dans laquelle la pression d'alimentation est redirigée vers l'actionneur de déplacement (6) pour déplacer l'actionneur d'entraînement (1) vers la position dégagée, et une position d'activation dans laquelle la pression est envoyée vers un organe de servocommande (15) de l'actionneur de déplacement.

## Patentansprüche

1. Verfahren zur Sicherung eines Rotationsantriebsaktors (1) zum Rotationsantrieb eines Rades (2) eines Luftfahrzeugfahrwerks in ausgerückter Position von dem Rad, wobei der Antriebsaktor an dem Fahrwerk beweglich zwischen der genannten ausgerückten Position, in der er von dem Rad entfernt ist, und einer Eingriffsposition gelagert ist, in der er mit dem Rad zusammenwirkt, um dessen Rotationsantrieb sicherzustellen, wobei ein Bewegungsaktor (6) an den Antriebsaktor gekoppelt ist, um diesen zwischen den beiden Positionen zu bewegen, und wobei ein Verriegelungsorgan (7) angeordnet ist, um den Antriebsaktor in ausgerückter Position zu verriegeln, wobei das Verfahren **dadurch gekennzeichnet ist, dass** es, während der Antriebsaktor in ausgerückter Position verriegelt ist, den Schritt des gesteuerten Haltens des Bewegungsaktors (6) umfasst, um den Antriebsaktor (1) in die ausgerückte Position zu bewegen.

2. Verfahren nach Anspruch 1, bei dem man einen hydraulischen Versorgungskreis zur hydraulischen Versorgung des Bewegungsaktors (6) mit einem Selektor (10) ausstattet, der eine stabile Ruhestellung (10A) hat, in der der Bewegungsaktor (6) gesteuert wird, um den Antriebsaktor (1) in die ausgerückte Position zu bewegen.

3. Verfahren nach Anspruch 2, bei dem der Selektor (10) eine gesteuerte Druckentlastungsstellung (10C) zur Druckentlastung des Versorgungskreises des Aktors umfasst.

4. Verfahren nach Anspruch 2, bei dem der Selektor (10) eine gesteuerte Betriebsstellung (10A) umfasst, in der der Bewegungsaktor von einem Servosteuerungsorgan (15) gesteuert werden kann.

5. Verfahren nach Anspruch 4, bei dem man den hydraulischen Kreis mit einem Modusventil (13) ausstattet, das nur mit Druck versorgt wird, wenn der Selektor (10) in der Betriebsstellung ist, und das eine stabile Ruhestellung umfasst, in der der Versorgungsdruck zum Bewegungsaktor (6) weitergeleitet wird, um den Antriebsaktor (1) in die ausgerückte Position zu bewegen, sowie eine Aktivierungsstellung, in der der Druck zu einem Servosteuerungsorgan (15) des Bewegungsaktors gesendet wird.

## Claims

1. A method for securing a rotating drive actuator (1) of an aircraft landing gear wheel (2) in an open position of the aircraft landing gear wheel, the drive actuator being movably mounted on a landing gear between said open position in which it is remote from the aircraft landing gear wheel and an engaged position in which it cooperates with the aircraft landing gear wheel to ensure its rotating drive, a displacement actuator (6) being coupled to the drive actuator to move it between the two positions, and a locking member (7) being arranged to lock the drive actuator in the open position, the method being **characterized in that** it comprises the step, while the drive actuator is locked in the open position, of holding the controlled displacement actuator (6) to move the drive actuator (1) to the open position.

2. A method according to claim 1, wherein a hydraulic supply circuit for the displacement actuator (6) is provided with a selector (10) having a stable rest position (10A) in which the displacement actuator (6) is controlled to move the drive actuator (1) to the open position.

3. A method according to claim 2, wherein the selector (10) has a controlled position (10C) for depressurizing the actuator supply circuit.

4. A method according to claim 2, wherein the selector (10) has an operational controlled position (10A) in which the displacement actuator can be controlled by a servo control member (15).

5. A method according to claim 4, wherein the hydraulic supply circuit is equipped with a mode valve (13) which is supplied with pressure only if the selector (10) is in the operational position, and which has a stable rest position in which the supply pressure is redirected to the displacement actuator (6) to move the drive actuator (1) to the open position, and an activation position in which the pressure is supplied to a servo control member (15) of the displacement actuator.
